# EUROPÄISCHE PATENTSCHRIFT

(11) **EP 3 555 573 B1**
(45) Veröffentlichungstag und Bekanntmachung des Hinweises auf die Patenterteilung: **16.03.2022**
(21) Anmeldenummer: 17797575.2
(22) Anmeldetag: 30.10.2017
(51) Int. Cl.: B33Y 80/00, B22F 10/00, G01F 15/18

(54) **MESSROHR FÜR EIN MESSGERÄT BZW. MITTELS EINES SOLCHEN MESSROHRS GEBILDETES MESSGERÄT SOWIE HERSTELLVERFAHREN FÜR EIN SOLCHES MESSROHR**
MEASUREMENT TUBE FOR A MEASURING DEVICE, MEASURING DEVICE FORMED BY MEANS OF SUCH A MEASUREMENT TUBE, AND PRODUCTION METHOD FOR SUCH A MEASUREMENT TUBE
TUBE DE MESURE POUR APPAREIL DE MESURE OU APPAREIL DE MESURE FORMÉ AU MOYEN D'UN TEL TUBE DE MESURE ET PROCÉDÉ DE FABRICATION D'UN TEL TUBE DE MESURE

(30) Priorität: 14.12.2016 DE 102016124358
(43) Veröffentlichungstag der Anmeldung: 23.10.2019
(60) Teilanmeldung: 22150323.8
(73) Patentinhaber: Endress+Hauser Flowtec AG, 4153 Reinach (CH)
(72) Erfinder: UNDI, Torsten, 79618 Rheinfelden (DE); STRUB, Andreas, 79576 Weil am Rhein (CH); KADE, Andris, 79689 Maulburg (DE)
(74) Vertreter: Andres, Angelika Maria
(86) Internationale Anmeldenummer: PCT/EP2017/077763
(87) Internationale Veröffentlichungsnummer: WO 2018/108378

(56) Entgegenhaltungen:
- DE-A1-102010 043 781
- DE-A1-102014 119 073
- US-A- 4 220 046
- US-A- 5 962 790
- US-A- 6 003 384
- US-A1- 2016 202 101

## Beschreibung

Die Erfindung betrifft ein für ein Meßgerät vorgesehenes Meßrohr mit einem röhrenförmigen, Grundkörper und einer darauf angeordnete Sensorhalterung für einen Sensor, ein Herstellungsverfahren für ein solches Meßrohr bzw. ein mittels eines solchen Meßrohrs gebildetes Meßgerät.

In der Prozeßmeß- und Automatisierungstechnik werden für die Messung von Meßgrößen fluider bzw. strömender Meßstoffe, beispielsweise nämlich von in Rohrleitungen strömenden Flüssigkeiten oder Gasen, Meßgeräte mit einem in den Verlauf einer den jeweiligen Meßstoff führenden Rohrleitung, beispielsweise mittels Flanschverbindung, eingegliederte Meßrohr sowie einem daran angebrachten Sensor verwendet, der dafür eingerichtet ist, wenigstens eine Meßgröße zu erfassen und in ein korrespondierendes, nämlich von der wenigstens einen Meßgröße abhängiges Sensorsignal zu wandeln. Zum Verarbeiten des Sensorsignals weist ein solches Meßgerät zudem eine mit dem Sensor elektrisch verbundene, beispielsweise auch mittels wenigstens eines Mikroprozessors gebildete, Meßelektronik auf, die dafür eingerichtet ist, das wenigstens eine Sensorsignal zu empfangen und basierend auf dem wenigstens einen Sensorsignal Meßwerte für die wenigstens eine Meßgröße zu ermitteln. Bei der Meßgröße kann es sich beispielsweise um eine Volumendurchflußrate, eine Massendurchflußrate, eine Strömungsgeschwindigkeit oder einen anderen Strömungsparameter oder aber beispielsweise auch um eine Dichte, eine Temperatur, einen Druck oder einen pH-Wert handeln, mithin kann das Meßgerät als ein Durchflußmeßgerät, beispielsweise nämlich ein Wirbel-Durchflußmeßgerät, ein Ultraschall-Durchflußmeßgerät, ein Coriolis-Durchflußmeßgerät, ein thermisches Durchflußmeßgerät oder ein magnetisch-induktives Durchflußmeßgerät, ein Temperatur-Meßgerät, Druck-Meßgerät oder pH-Wert-Meßgerät ausgebildet sein. Beispiele für solche Meßgeräte sind u.a. in der DE-A 10 2013 114 382, der DE-A 10 2013 114 483, der DE-A 102013013476, der EP-B 1 413 858, der EP-B 892 251, der US-A 60 03 384, der US-A 60 47 457, der US-A 2003/0019308, der US-A 2009/0013798, der US-A 20100031755, der US-A 2010/0139390, der US-A 2011/0120229, der US-A 2011/0303006, der US-A 2012/0227496, der US-A 2015/0268082, der US-A 2015/0338252, der US-A 2016/0069717, der US-A 2016/0216145 oder der WO-A 2016/034417 beschrieben.

Demnach ist ein Meßrohr der in Rede stehenden Art mittels eines röhrenförmigen - zumeist metallischen und/oder zumindest abschnittsweise hohlzylindrischen - Grundkörper mit einer Wandung und einem davon umhüllten, beispielsweise zylinderförmigen, Lumen, das dafür eingerichtet ist, den Meßstoff zu führen sowie mittels eines auf einer äußeren, nämlich dem Lumen abgewandten - beispielsweise zumindest abschnittsweise planaren und/oder zumindest abschnittsweise gewölbten - Mantelfläche der Wandung des Grundkörpers angeordnete und stoffschlüssig damit verbundene Sensorhalterung für den Sensor. Der jeweilige Sensor kann - wie u.a. auch in den vorgenannten US-A 60 03 384, US-A 2011/0303006, DE-A 10 2013 114 382, DE-A 10 2013 114 483 bzw. EP-B 892 251 jeweils gezeigt - beispielsweise als eigenständige, nämlich die die Wandlung der physikalischen Meßgröße in das Sensorsignal vollumfänglich bewerkstelligende, ggf. auch zumindest teilweise in das Lumen des Grundkörpers hineinragende, Sonde ausgebildet sein; der Sensor kann aber beispielsweise auch, wie u.a. auch in der EP-B 1 413 858, der US-A 2011/0120229, der US-A 2016/0216145 oder der US-A 2016/0069717 jeweils gezeigt, ein mittels entlang des Meßrohrs verteilt positionierten, ggf. auch teilweise in das Lumen des Grundkörpers hineinragende Einzelkomponenten gebildetes, komplexes Sensorsystem sein.

Die - typischerweise metallische bzw. aus gleichem Material wie Wandung des Grundkörpers bestehende - Sensorhalterung ist dafür eingerichtet, mit wenigstens einer Sensorkomponente des jeweiligen Sensors, beispielsweise auch wieder lösbar, mechanisch verbunden zu werden. Sie kann dafür z.B. als ein ggf. auch die jeweilige Sensorkomponente teilweise umhüllender Anschlußstutzen oder als eine Anschluß- und/oder Montagefläche für die wenigstens eine Sensorkomponente bereitstellendes Podest ausgebildet sein. Für den vorgenannten Fall, daß es sich bei dem Meßgerät um ein Ultraschall-Durchflußmeßgerät handelt, kann die Sensorhalterung beispielsweise auch als Koppelelement für einen Ultraschallwandler dienen; im Falle eines als Wirbel-Durchflußmeßgerät ausgebildeten Meßgerät kann die mit der Sensorhalterung verbundene Komponente des Sensors ein eine in das Lumen hineinragende Sensorfahne haltender, ggf. scheibenförmiger bzw. membranartiger Verformungskörper sein.

Zum Verbinden von Sensorhalterung und Sensorkomponente weist die Sensorhalterung typischerweise jeweils eine - zumeist planare - Anschluß- und/oder Montagefläche für die wenigstens eine Sensorkomponente auf, die zu einer jeweils korrespondierenden Anschluß- bzw. Montagefläche der jeweiligen Sensorkomponente komplementär geformt ist. Im Ergebnis können sowohl eine Kontur der Sensorhalterung als auch deren jeweilige Anschluß- bzw. Montagefläche von der Mantelfläche der Wandung des Grundkörpers deutlich abweichen. Zwecks Bereitstellung der Sensorhalterung bzw. deren jeweiliger Anschluß- bzw. Montagefläche kann, wie u.a. in der US-A 2016/0069717 oder auch der US-A 60 03 384 gezeigt, in der Wandung des Grundkörpers eine entsprechende, beispielsweise durch ein Urformenverfahren in-situ oder ein subtraktives, nämlich Material abtragendes Herstellungsverfahren geformte, Ausnehmung vorgesehen sein. Alternativ oder in Ergänzung kann beispielsweise ein mit dem Grundkörper stoffschlüssig verbundener, beispielsweise nämlich daran angeschweißter, Anschlußstutzen die jeweilige Anschluß- bzw. Montagefläche bereitstellen.

Bauprinzip bedingt ist eine jeweilige Größe der Anschluß- bzw. Montagefläche durch eine jeweilige Größe eines Querschnitts des Grundkörpers sowie eine Stärke von dessen Wandung limitiert. Darüberhinaus können sich bei stoffschlüssiger Verbindung von Sensorhalterung und Grundkörper gelegentlich aufwendig herzustellende Schweißgeometrien bzw. -nähte ergeben, einhergehend mit entsprechend hohen Herstellkosten für das jeweilige Meßrohr.

Das Dokument US 2016/202101 A1 offenbart ein Messrohr, das eine Sensorhalterung aufweist, wobei das Messrohr und die Sensorhalterung durch ein additives Fertigungsverfahren gefertigt sind.

Ausgehend vom vorbezeichneten Stand der Technik besteht eine Aufgabe der Erfindung darin, ein Meßrohr anzugeben, bei dem die Sensorhalterung auf einfache Weise an den Grundkörper angebracht ist und bei dem die Sensorhalterung, nicht zuletzt aber auch die dadurch bereitgestellte Anschluß- bzw. Montagefläche, weitgehend unabhängig von Form und Größe des Grundkörpers des Meßrohrs gestaltet und dimensioniert werden kann.

Zur Lösung der Aufgabe besteht die Erfindung in einem Meßrohr für ein Meßgerät, beispielsweise nämlich für ein Durchfluß-Meßgerät, welches, beispielsweise zumindest abschnittsweise hohlzylindrische, Meßrohr umfaßt: einen röhrenförmigen, beispielsweise metallischen und/oder zumindest abschnittsweise hohlzylindrischen, Grundkörper mit einer Wandung und einem davon umhüllten, beispielsweise zylinderförmigen, Lumen, das dafür eingerichtet ist, einen fluiden Meßstoff zu führen; sowie eine auf einer äußeren, nämlich dem Lumen abgewandten, beispielsweise zumindest abschnittsweise gewölbten, Mantelfläche der Wandung des Grundkörpers angeordnete und stoffschlüssig damit verbundene, beispielsweise metallische und/oder als Anschlußstutzen ausgebildete, Sensorhalterung, die dafür eingerichtet ist, zumindest mit wenigstens einer Sensorkomponente, nämlich einer Komponenten eines dem Erfassen wenigstens einer Meßgröße eines im Lumen befindlichen Meßstoffs dienlichen Sensors, beispielsweise wieder lösbar, mechanisch verbunden zu werden. Der Grundkörper des erfindungsgemäßen Meßrohrs ist mittels eines gegossenen, gepressten oder geschweißten Rohrs gebildet und/oder durch eine Umformverfahren hergestellt und die Sensorhalterung des erfindungsgemäßen Meßrohrs ist zumindest anteilig durch ein additives Fertigungsverfahren, beispielsweise ein Freiraumverfahren und/oder ein Pulverbettverfahren, unmittelbar auf der Mantelfläche der Wandung des Grundkörpers hergestellt.

Darüberhinaus besteht die Erfindung in einem Meßgerät, beispielsweise einem Durchfluß-Meßgerät, zum Messen wenigstens einer Meßgröße eines, beispielsweise strömenden, Fluids, welches Meßgerät umfaßt: das vorbezeichnete erfindungsgemäße Meßrohr; einen an nämlichem Meßrohr befestigten, beispielsweise zumindest teilweise in das Lumen des Grundkörpers hineinragenden, Sensor zum Erfassen wenigstens einer Meßgröße eines im Lumen des Meßrohrs befindlichen Meßstoffs und zum Erzeugen eines nämliche Meßgröße repräsentierenden Sensorsignals, von welchem Sensor zumindest eine Komponente mit der Sensorhalterung, beispielsweise wieder lösbar, mechanisch verbunden ist; sowie eine mit dem Sensor elektrisch verbundene, beispielsweise mittels wenigstens eines Mikroprozessors gebildete, Meßelektronik, die dafür eingerichtet ist, das wenigstens eine Sensorsignal zu empfangen und zu verarbeiten, beispielsweise nämlich basierend auf dem wenigstens einen Sensorsignal Meßwerte für die wenigstens eine Meßgröße zu ermitteln.

Darüberhinaus besteht die Erfindung auch in einem Verfahren zum Herstellen eines Meßrohrs für ein Meßgerät, welches Verfahren umfaßt:
- Bereitstellen eines röhrenförmigen, beispielsweise metallischen und/oder zumindest abschnittsweise hohlzylindrischen, Grundkörpers mit einer Wandung und einem davon umhüllten, beispielsweise zylinderförmigen, Lumen;
- Auftragen von verflüssigtem Material, beispielsweise verflüssigtem Metall, auf eine äußere, nämlich dem Lumen abgewandte, beispielsweise zumindest abschnittsweise gewölbte, Mantelfläche der Wandung des Grundkörpers;
- sowie Erstarrenlassen von auf der äußeren Mantelfläche appliziertem flüssigem Material zum Bilden eines mit der Wandung des Grundkörpers stoffschlüssig verbundenen Teilstücks einer Sensorhalterung für einen dem Erfassen wenigstens einer Meßgröße eines im Lumen befindlichen, beispielsweise fluiden, Meßstoffs dienlichen Sensor, welche Sensorhalterung dafür vorgesehen bzw. eingerichtet ist, zumindest mit wenigstens einer Sensorkomponente, nämlich einer Komponente des Sensors, beispielsweise wieder lösbar, mechanisch verbunden zu werden;

▪ Auftragen von verflüssigtem Material, insb. verflüssigtem Metall, auf eine äußere, nämlich dem Lumen abgewandte Fläche eines zuvor gebildeten Teilstücks der Sensorhalterung;
▪ sowie Erstarrenlassen von auf nämlicher äußeren Fläche des zuvor gebildeten Teilstücks appliziertem flüssigem Material zum Vergrößern nämlichen Teilstücks bzw. zum Bilden eines weiteren Teilstücks der Sensorhalterung.

Nach einer ersten Ausgestaltung des Meßohrs der Erfindung ist ferner vorgesehen, daß der Grundkörper mittels eines Stahlrohrs oder eines Edelstahlrohrs gebildet ist.

Nach einer zweiten Ausgestaltung des Meßohrs der Erfindung ist ferner vorgesehen, daß die Sensorhalterung als, beispielsweise hohlzylindrischer und/oder planare Anschluß- und/oder Montagefläche für die wenigstens eine Sensorkomponente aufweisender, Anschlußstutzen ausgebildet ist.

Nach einer dritten Ausgestaltung des Meßohrs der Erfindung ist ferner vorgesehen, daß die Sensorhalterung als ein, beispielsweise eine planare Anschluß- und/oder Montagefläche für die wenigstens eine Sensorkomponente aufweisendes, Podest ausgebildet ist.

Nach einer vierten Ausgestaltung des Meßohrs der Erfindung ist ferner vorgesehen, daß der Grundkörper durch ein Gießverfahren oder durch ein Strangpreßverfahren hergestellt ist.

Nach einer fünften Ausgestaltung des Meßohrs der Erfindung ist ferner vorgesehen, daß die Sensorhalterung nach der Herstellung des Grundkörpers hergestellt ist.

Nach einer sechsten Ausgestaltung des Meßohrs der Erfindung ist ferner vorgesehen, daß die Sensorhalterung wenigstens eine, beispielsweise durch ein subtraktives, nämlich materialabtragendes Fertigungsverfahren hergestellte, planare Oberfläche aufweist.

Nach einer siebenten Ausgestaltung des Meßohrs der Erfindung ist ferner vorgesehen, daß die Sensorhalterung wenigstens eine, beispielsweise planare, Oberfläche aufweist, die durch ein subtraktives, nämlich materialabtragendes Fertigungsverfahren, beispielsweise Fräsen und/oder Erodieren, hergestellt ist.

Nach einer achten Ausgestaltung des Meßohrs der Erfindung ist ferner vorgesehen, daß die Wandung des Grundkörpers und die Sensorhalterung jeweils aus einem gleichen Material und/oder aus Metall, beispielsweise einer Nickelbasislegierung, bestehen.

Nach einer neunten Ausgestaltung des Meßohrs der Erfindung ist ferner vorgesehen, daß die Wandung des Grundkörpers aus einem Metall, beispielsweise einer Nickelbasislegierung, besteht.

Nach einer zehnten Ausgestaltung des Meßohrs der Erfindung ist ferner vorgesehen, daß die Sensorhalterung aus einem Metall, beispielsweise einer Nickelbasislegierung, besteht.

Nach einer elften Ausgestaltung des Meßohrs der Erfindung ist ferner vorgesehen, daß die Sensorhalterung zumindest anteilig durch wenigstens eines der folgenden additiven Fertigungsverfahren hergestellt ist:
- selektives Laserschmelzen (SLM);
- selektives Lasersintern (SLS);
- Elektronenstrahlschmelzen (Electron Beam Melting = EBM).

Nach einer zwölften Ausgestaltung des Meßohrs der Erfindung ist ferner vorgesehen, daß das Meßrohr zumindest abschnittsweise gekrümmt ist

Nach einer dreizehnten Ausgestaltung des Meßohrs der Erfindung ist ferner vorgesehen, daß das Meßrohr zumindest abschnittsweise gerade ist.

Nach einer vierzehnten Ausgestaltung des Meßohrs der Erfindung ist ferner vorgesehen, daß die Sensorhalterung zumindest anteilig durch wenigstens eines der folgenden additiven Fertigungsverfahren hergestellt ist:
- Auftragschweißen (Cladding);
- Metall-Pulver-Auftragsverfahren (MPA);
- Kaltgasspritzen;
- Elektronenstrahlschweißen (Electron Beam Welding = EBW).

Nach einer fünfzehnten Ausgestaltung des Meßohrs der Erfindung ist ferner ein, beispielsweise als Durchgangsbohrung ausgebildeter, Durchgangskanal vorgesehen, der sich teilweise durch die Sensorhalterung und teilweise durch die Wandung des Grundkörpers erstreckt.

Nach einer sechzehnten Ausgestaltung des Meßohrs der Erfindung ist ferner zumindest ein, beispielsweise als Sacklochbohrung ausgebildetes, Sackloch mit einem offenen Ende und mit einem geschlossenen Ende vorgesehen, welches Sackloch sich teilweise durch die Sensorhalterung und teilweise durch die Rohrwand erstreckt, derart, daß das offene Ende in der Sensorhalterung und das geschlossene Ende innerhalb der Wandung des Grundkörpers verortet sind.

Nach einer siebzehnten Ausgestaltung des Meßohrs der Erfindung ist ferner vorgesehen, daß das Meßrohr dafür eingerichtet ist vibrieren gelassen zu werden.

Nach einer ersten Ausgestaltung des Meßgeräts der Erfindung handelt es sich dabei um ein Durchflußmeßgerät, beispielsweise ein Wirbel-Durchflußmeßgerät, ein Ultraschall-Durchflußmeßgerät, ein Coriolis-Durchflußmeßgerät, ein vibronisches Dichte- und/oder Viskositäts-Meßgerät, ein thermisches Durchflußmeßgerät, oder ein magnetisch-induktives Durchflußmeßgerät.

Nach einer zweiten Ausgestaltung des Meßgeräts der Erfindung handelt es sich dabei um ein Ultraschall-Durchflußmeßgerät, wobei die Sensorhalterung als Koppelelement für einen Ultraschallwandler dient.

Nach einer dritten Ausgestaltung des Meßgeräts der Erfindung handelt es sich dabei um ein Wirbel-Durchflußmeßgerät, wobei die mit der Sensorhalterung verbundene Komponente des Sensors ein eine in das Lumen hineinragende Sensorfahne haltender, beispielsweise scheibenförmiger bzw. membranartiger, Verformungskörper ist.

Nach einer vierten Ausgestaltung des Meßgeräts der Erfindung handelt es sich dabei um ein Coriolis-Massendurchflußmeßgerät und/oder um ein vibronisches Dichte- und/oder Viskositäts-Meßgerät, wobei die mit der Sensorhalterung verbundene Komponente des Sensors eine Spule ist oder wobei die mit der Sensorhalterung verbundene Komponente des Sensors ein, beispielsweise becherförmiger, Permanentmagnet ist.

Nach einer fünften Ausgestaltung des Meßgeräts der Erfindung handelt es sich dabei um ein Temperatur-Meßgerät.

Nach einer sechsten Ausgestaltung des Meßgeräts der Erfindung handelt es sich dabei um ein pH-Wert-Meßgerät.

Nach einer siebenten Ausgestaltung des Meßgeräts der Erfindung handelt es sich dabei um ein Druck-Meßgerät.

Nach einer ersten Weiterbildung des Verfahrens der Erfindung umfaßt dieses weiters einen Schritt des Abtragens von überschüssigen Material aus einem zuvor gebildeten Teilstück der Sensorhalterung.

Nach einer zweiten Weiterbildung des Verfahrens der Erfindung umfaßt dieses weiters einen Schritt des Ausbildens, beispielsweise nämlich des Ausbohrens und/oder des Ausfräsens, eines sich teilweise durch die Sensorhalterung und teilweise durch die Rohrwand erstreckenden Durchgangskanals.

Nach einer dritten Weiterbildung des Verfahrens der Erfindung umfaßt dieses weiters einen Schritt des Ausbildens, beispielsweise nämlich des Ausbohrens und/oder Ausfräsens, eines sich teilweise durch die Sensorhalterung und teilweise durch die Rohrwand erstreckenden Sacklochs mit einem offenen Ende und mit einem geschlossenen Ende, derart, daß das offene Ende in der Sensorhalterung und das geschlossene Ende innerhalb der Wandung des Grundkörpers verortet sind.

Ein Grundgedanke der Erfindung besteht darin, den Herstellungsprozeß von Meßrohren der in Rede stehenden Art zu verbessern, daß auf einen geeigneten, beispielsweise auch konventionellen bzw. kostengünstig zu fertigenden, Grundkörper eine hinsichtlich Form und Größe optimal an den jeweiligen Sensor bzw. dessen Funktionsweise angepaßte Sensorhalterung in einem automatisierten, gleichwohl überwiegend oder sogar ausschließlich universelle Betriebsmittel einsetzenden, insb. nämlich auch ohne Gußformen bzw. Druckgußformen auskommenden, Prozeßschritt nachträglich angetragen wird.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: perspektivisch ein, beispielsweise als Durchfluß-Meßgerät ausgebildetes, Meßgerät zum Messen wenigstens einer, ggf. auch zeitlich veränderlichen Meßgröße;
- Fig.2: ein Meßgerät gemäß Fig. 1 in einer Seitenansicht;
- Fig. 3: in einer Seitenansicht ein als Meßgerät gemäß Fig. 1 geeignetes Wirbel-Durchflußmeßgerät;
- Fig. 4: das Wirbel-Durchflußmeßgerät gemäß Fig. 3 in einer geschnittenen Seitenansicht;
- Fig. 5: perspektivisch eine erste Variante eines für ein Meßgerät gemäß Fig. 1, beispielsweise auch für Wirbel-Durchflußmeßgerät gemäß Fig. 3, geeigneten Meßrohrs;
- Fig. 6: perspektivisch eine zweite Variante eines für ein, beispielsweise als ein Ultraschall-Durchflußmeßgerät oder auch als ein Temperatur-Meßgerät ausgebildetes, Meßgerät gemäß Fig. 1 geeigneten Meßrohrs;
- Fig. 7: perspektivisch eine dritte Variante eines für ein, beispielsweise auch als ein Ultraschall-Durchflußmeßgerät, als ein pH-Wert-Meßgerät, als ein Druck-Meßgerät oder beispielsweise auch als ein Temperatur-Meßgerät ausgebildetes, Meßgerät gemäß Fig. 1 geeigneten Meßrohrs; und
- Fig. 8: in einer geschnittenen Seitenansicht eine weitere Variante eines für ein Meßgerät gemäß Fig. 1 bzw. gemäß Fig. 3 geeigneten Meßrohrs.

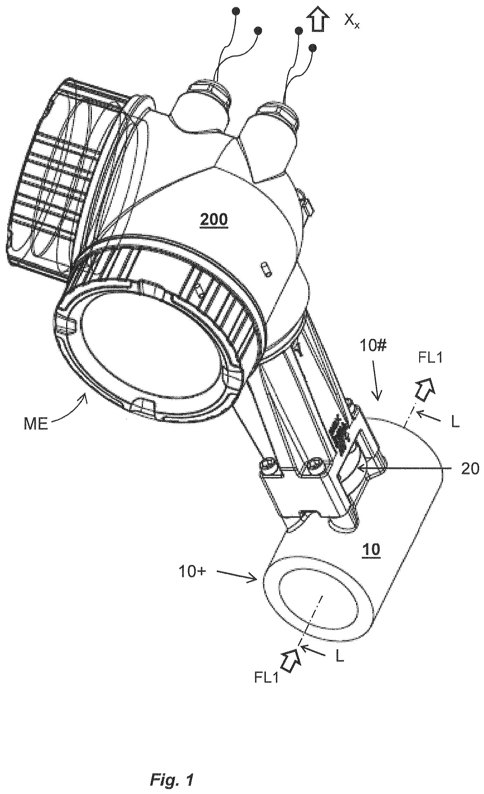

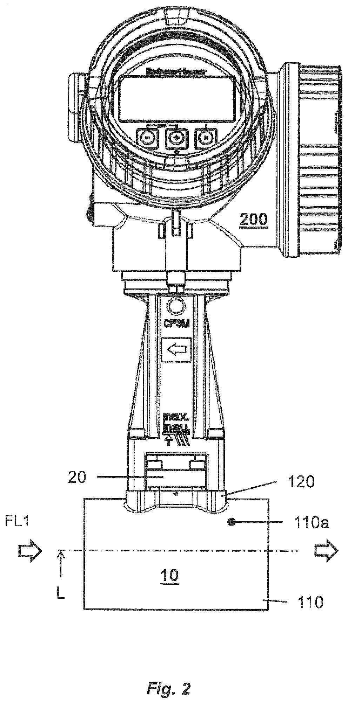

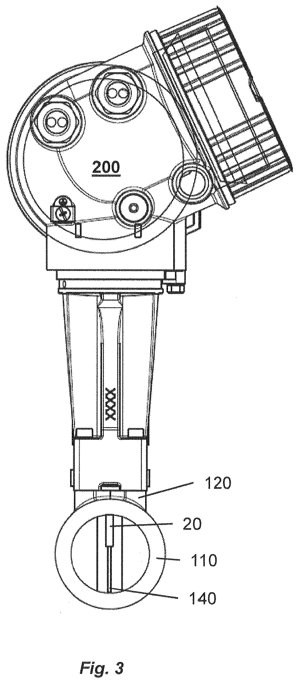

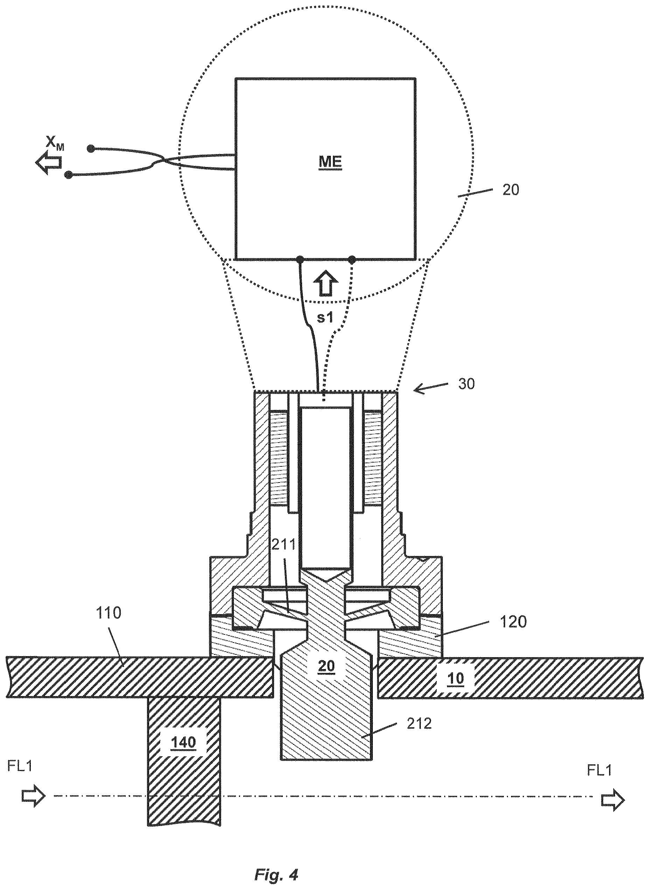

In Fig. 1 und 2 ist ein Ausführungsbeispiel für ein Meßgerät zum Messen wenigstens einer, ggf. auch zeitlich veränderlichen Meßgröße, wie z.B. einer Strömungsgeschwindigkeit v, einer Volumendurchflußrate V', einer Massendurchflußrate, einer Temperatur, eines Drucks oder eines ph-Werts, eines in einer Rohrleitung strömenden fluiden Meßstoffs FL1, beispielsweise eines Gases oder einer Flüssigkeit, gezeigt. Bei dem Meßgerät kann es sich demnach beispielsweise um ein Durchflußmeßgerät, beispielsweise nämlich ein Ultraschall-Durchflußmeßgerät, ein vibronisches Dichte- und/oder Viskositäts-Meßgerät, ein (vibronisches) Coriolis-Durchflußmeßgerät, ein thermisches Durchflußmeßgerät, ein magnetisch-induktives Durchflußmeßgerät oder, wie auch in Fig. 3 bzw. 4 gezeigt, ein Wirbel-Durchflußmeßgerät, handeln; das Meßgerät kann aber beispielsweise auch ein Temperatur-Meßgerät, ein pH-Wert-Meßgerät oder auch ein Druck-Meßgerät sein. Die Rohrleitung wiederum kann beispielsweise als Anlagenkomponente eines verfahrenstechnischen Prozesses, eines Wasser- oder eines Wärmeversorgungsnetzes, eines Turbinenkreislaufes, einer Erd- oder Biogasanlage, eines Gasversorgungsnetzes, einer Verladestation für petrochemische Stoffe oder dergleichen ausgebildet, mithin kann das Fluid beispielsweise auch Trinkwasser, Wasserdampf, Erdöl oder beispielsweise auch ein (komprimiertes) Erdgas oder Biogas sein.

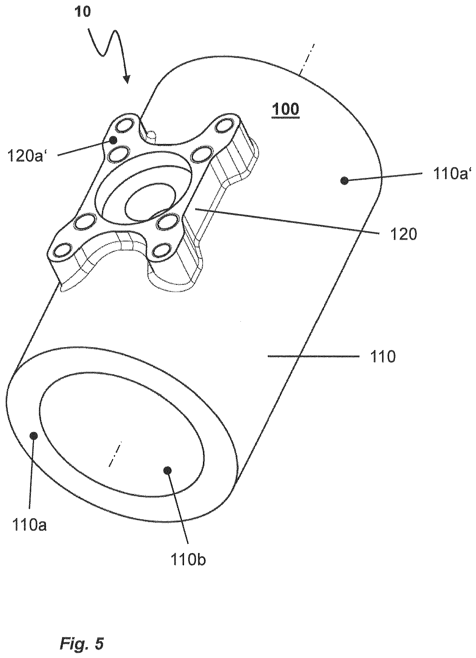

Das Meßgerät weist ein - hier zumindest abschnittsweise hohlzylindrisches - Meßrohr 10, von dem verschiedene Ausführungsvarianten in Fig. 5, 6 bzw. 7 dargestellt sind, sowie einen an nämlichem Meßrohr 10 befestigten Sensor 20 auf.

Das Meßrohr 10 ist, wie auch in Fig. 1 gezeigt bzw. auch aus einer Zusammenschau der Fig. 1 und 5 ohne weiteres ersichtlich, mittels eines röhrenförmigen - beispielsweise metallischen und/oder zumindest abschnittsweise hohlzylindrischen - Grundkörpers 110 mit einer Wandung 110a und einem davon umhüllten - beispielsweise nämlich zylinderförmigen - dem Führen des jeweiligen fluiden Meßstoffs dienlichen Lumen 110b sowie einer auf einer äußeren, nämlich dem Lumen abgewandten - auch zumindest abschnittsweise gewölbten - Mantelfläche 110a' der Wandung 110a des Grundkörpers 110 angeordneten Sensorhalterung 120 gebildet. Nicht zuletzt für den vorbezeichneten Fall, daß es sich bei dem Meßgerät um ein vibronisches Durchflußmeßgerät, beispielsweise nämlich ein vibronisches Dichte- und/oder Viskositäts-Meßgerät bzw. um ein vibronisches Coriolis-Durchflußmeßgerät handelt, ist das Meßrohr nach einer weiteren Ausgestaltung der Erfindung dafür eingerichtet vibrieren gelassen zu werden, beispielsweise während es vom Meßstoff durchströmt ist.

Der Grundkörper 110 bzw. das damit gebildete Meßrohr 10 erstreckt sich von einem Einlaßende 10+ bis zu einem Auslaßende 10# und ist im besonderen dafür vorgesehen, in den Verlauf der vorbezeichneten Rohrleitung unter Bildung eines durchgängigen Strömungspfades eingesetzt zu werden. Am Einlaßende 10+ wie auch am Auslaßende 10# kann dementsprechend zudem jeweils ein dem Herstellen einer leckfreien Flanschverbindung mit jeweils einem korrespondierenden Flansch an einem ein- bzw. auslaßseitig Leitunsgsegment der Rohrleitung dienender Flansch vorgesehen sein. Ferner kann der Grundkörper, wie auch in Fig. 1 bzw. 5 jeweils gezeigt, im wesentlichen gerade, beispielsweise nämlich als Hohlzylinder mit kreisförmigem Querschnitt ausgebildet sein, derart, daß im Ergebnis der Grundkörper 110 bzw. das damit gebildete Meßrohr 10 eine das Einlaßende und das Auslaßende imaginär verbindende gedachte gerade Längsachse L aufweist. Alternativ oder in Ergänzung kann der Grundkörper bzw. das damit gebildete Meßrohr aber auch zumindest abschnittsweise gekrümmt, beispielsweise nämlich im wesentlichen V-förmig oder U-förmig ausgebildet sein. Die Wandung des Grundkörpers 110 besteht nach einer Ausgestaltung der Erfindung aus einem Metall, beispielsweise einer Titan, Tantal und/oder Zirkonium enthaltenden Metalllegierung, einer Nickelbasislegierung oder etwa einem ggf. auch rostfreien Stahl. Der Grundkörper 110 ist dementsprechend mittels eines gegossenen, gepressten oder geschweißten Rohrs, beispielsweise nämlich einem, ggf. auch nahtlosen Stahl- bzw. Edelstahlrohr, gebildet und/oder durch ein Umformverfahren, wie z.B. ein Strangpreßverfahren, hergestellt.

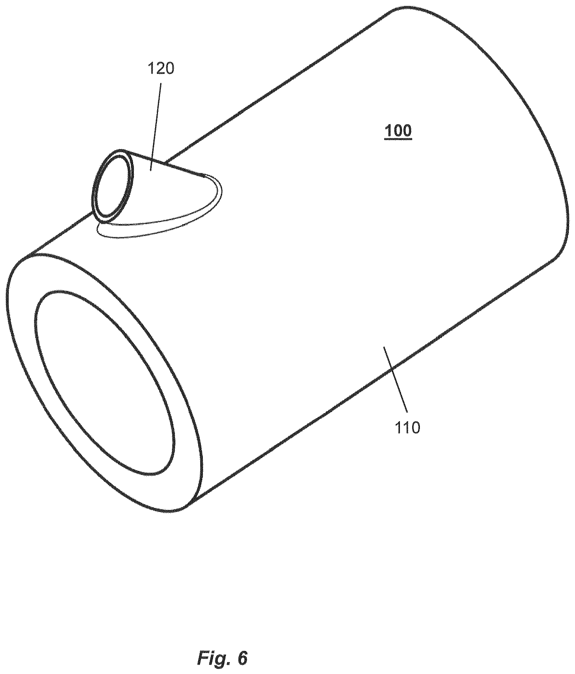

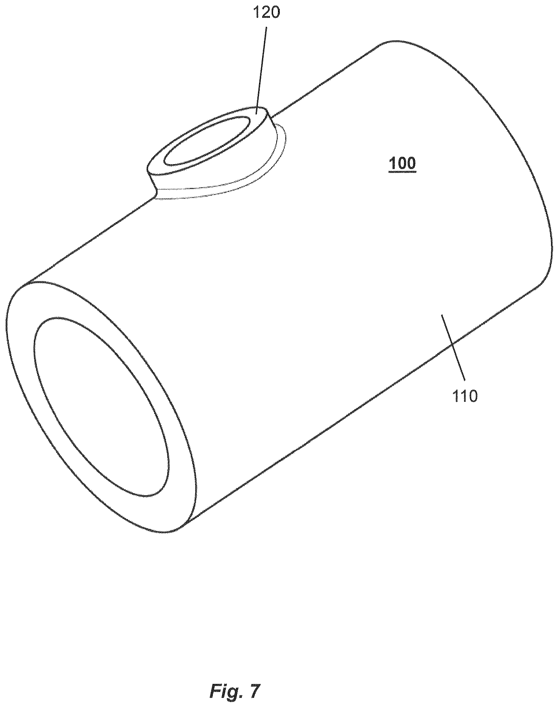

Die Sensorhalterung 120 des erfindungsgemäßen Meßohrs 10 bzw. des damit gebildeten Meßgeräts ist stoffschlüssig mit der Wandung 110a des Grundkörpers 110 verbunden und im besonderen dafür vorgesehen bzw. eingerichtet, zumindest mit wenigstens einer Sensorkomponente, nämlich einer Komponenten des Sensors 20, insb. wieder lösbar, mechanisch verbunden zu werden. Dafür kann die Sensorhalterung 120, wie auch in Fig. 5 dargestellt, beispielsweise als, insb. massives, Podest oder, wie auch in Fig. 6 bzw. 7 jeweils angedeutet, beispielsweise als ein, insb. hohlzylindrischer, Anschlußstutzen ausgebildet sein. Zum Positionieren und Befestigen des Sensors 20 an der Sensorhalterung 120 weist diese nach einer weiteren Ausgestaltung der Erfindung eine, insb. planare, also ebene und/oder zu einer korrespondierenden Anschlußfläche des Sensors komplementäre, Anschluß- und/oder Montagefläche 120a' für die wenigstens eine Sensorkomponente auf. Nämliche Anschluß- und/oder Montagefläche 120a' kann ferner zumindest teilweise als eine Dichtfläche ausgebildet sein, die dafür eingerichtet ist, im Zusammenspiel mit einer korrespondierenden Dichtefläche der vorbezeichneten Sensorkomponente des Sensors 20 eine innige, insb. auch fluiddichte bzw. leckagefreie, Verbindung von Sensor 20 und Sensorhalterung 120 zu ermöglichen, ggf. auch unter Zwischenlage eines entsprechenden Dichtelements, wie etwa einer ringförmigen oder ringscheibenförmigen Dichtung. Nach einer weiteren Ausgestaltung der Erfindung besteht die Sensorhalterung 120 aus einem Metall, beispielsweise lNCONEL^{®}718 oder einer anderen Nickelbasislegierung, und/oder einem zumindest hinsichtlich seiner chemischen Zusammensetzung gleichen Material wie die Wandung des Grundkörpers. Beispielsweise können die Wandung 110 und die Sensorhalterung 120 aus einer gleichen Metalllegierung hergestellt sein. Ferner kann der Sensor 20 beispielsweise auch durch stoffschlüssiges Verbinden, insb. nämlich durch Verschweißen oder Verlöten, von Sensorhalterung und zugehöriger Sensorkomponente am Meßrohr fixiert sein; er kann aber beispielsweise auch mit der Sensorhalterung lösbar verbundenen, beispielsweise nämlich ver- bzw. angeschraubt sein.

Der Sensor 20 des erfindungsgemäßen Meßgeräts ist im besonderen dafür vorgesehen bzw. eingerichtet, die wenigstens einen Meßgröße des im Lumen des Meßrohrs 10 befindlichen Meßstoffs zu erfassen sowie ein nämliche Meßgröße repräsentierendes Sensorsignal s1 zu erzeugen. Der Sensor 20 und das Meßrohr 10 können dafür beispielsweise so ausgestaltet sein, daß der Sensor 20 lediglich außen am Meßrohr angebracht ist, gleichwohl nicht in das Lumen hineinragt bzw. daß der Sensor 20 die Meßgröße durch die Wandung 110a des Grundkörpers hindurch erfaßt; Sensor 20 und Meßrohr 10 können aber beispielsweise auch so ausgestaltet sein, daß der Sensor 20, wie auch in Fig. 4 angedeutet, von außen durch einen sich teilweise durch die Sensorhalterung 120 und teilweise durch die Rohrwand erstreckenden Durchgangskanal 3" - nämlich eine in die Sensorhalterung 120 sowie die Wandung 110 eingeformte bzw. als Durchgangsbohrung ausgebildet durchgehende Öffnung - hindurch in das Lumen des Grundkörpers 110 bzw. des Meßrohrs eingeführt sein. Insbesondere kann der Sensor 20 dabei so in den Durchgangskanal 3"eingesetzt sein, daß die Sensorkomponente diesen überdeckt bzw. hermetisch verschließt. In einem dem Sensor 20 zugewandte Endbereich des Durchgangskanals 3" kann in der Sensorhalterung eine die Sensorkomponente zumindest teilweise aufnehmende, nämlich auch seitlich umgreifende Fassung 3a ausgebildet sein. Der Durchgangskanal kann beispielsweise durch entsprechendes Ausbohren und/oder Ausfräsen von Material aus der Wandung 110 und der Sensorhalterung 120 hergestellt bzw. so ausgebildet sein, daß er einen (Innen-) Durchmesser aufweist, der in einem Bereich zwischen 10 mm und ca. 50 mm liegt.

Wie aus der Zusammenschau der Fig. 1, 2, 3 und 4 ersichtlich, umfaßt das Meßgerät desweiteren eine - beispielsweise in einem druck- und/oder schlagfesten Schutzgehäuse 200 untergebrachte und/oder mittels wenigstens eines Mikroprozessors gebildete - Meßelektronik ME, die mit dem Sensor elektrisch verbunden und dafür eingerichtet ist, das wenigstens eine Sensorsignal zu empfangen und zu verarbeiten, beispielsweise nämlich basierend auf dem wenigstens einen Sensorsignal wiederkehrend Meßwerte X_{M} für die wenigstens eine Meßgröße zu ermitteln. Mittels der Meßelektronik ME generierte Meßwerte X_{M} können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden. Das Schutzgehäuse 200 für die Meßelektronik ME kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein. In dem in den Fig. 1 - 4 jeweils gezeigten Ausführungsbeispielen ist das Meßgrät zudem als ein Meßgerät in Kompaktbauweise ausgebildet, bei dem also das Schutzgehäuse 200 mit darin angeordneter Meßelektronik ME am Meßrohr gehaltert ist, beispielsweise nämlich mittels eines halsförmigen, hier ebenfalls an der Sensorhalterung 120 wieder lösbar fixierten und zudem auch Komponenten des Sensors umhüllenden Anschlußstutzens 30.

Bei dem Meßgerät kann es sich, wie erwähnt bzw. wie auch in Fig. 3 bzw. 4 angedeutet, beispielsweise um ein Wirbel-Durchflußmeßgerät, mithin um ein solches Meßgerät handeln, bei dem der Sensor 20 dafür vorgesehen bzw. ausgestaltet ist, mit einer Strömungsgeschwindigkeit bzw. einer Volumendurchflußrate korrespondierende Druckschwankungen im durch das Meßrohr strömenden Meßstoff zu erfassen und bei dem das Sensorsignal s1 von nämlichen Druckschwankungen abhängig ist. Die mit der Sensorhalterung verbundene Komponente des Sensors 20 kann für diesen Fall beispielsweise ein eine in das Lumen hineinragende Sensorfahne 212 haltender, insb. scheibenförmiger bzw. membranartiger, Verformungskörper 211 sein. Verformungskörper 211 und Sensorfahne 212 können hier beispielsweise Bestandteile ein und desselben monolithischen Formteils sein, das beispielsweise in einem Urformverfahren hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 211 kann, wie bei derartigen Sensoren durchaus üblich, zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne 212 zumindest anteilig aus einem Metall, beispielsweisenämlich einem Edelstahl bzw. einer Nickelbasislegierung, bestehen; insbesondere können Verformungskörper und Sensorfahne auch aus dem gleichen Material hergestellt werden. Zum Erzeugen der vorbezeichneten Druckschwankungen kann, wie auch in wie auch in Fig. 3 und 4 angedeutet bzw. aus deren Zusammenschau ersichtlich, im Lumen des Grundkörpers 110 bzw. des Meßrohrs - hier nämlich stromaufwärts des Sensors 20 - ferner ein dem Bewirken einer Kármánsche Wirbelstrasse im strömenden Fluid dienlicher Stauköper 140 vorgesehen sein, wobei Sensor und Staukörper hier so dimensioniert und angeordnet sind, daß die Sensorfahne 112 in einen solchen Bereich in das Lumen 110* bzw. den darin geführte Meßstoff FL1 hineinragt, der im Betrieb des Meßsystems der vorbezeichneten Kármánschen Wirbelstrasse eingenommen wird, so daß die mittels des Sensors 20 erfaßten Druckschwankungen durch am Staukörper 4 mit einer von der Strömungsgeschwindigkeit bzw. Volumendurchflußrate abhängige Ablösrate (~ 1/f_{Vtx}) abgelöste gegenläufige Wirbel verursachte periodische Druckschwankungen sind und das Sensorsignal s1 eine mit der Ablöserate nämlicher Wirbel korrespondierende Signalfrequenz (~ f_{Vtx}) aufweist.

Zum Generieren des Sensorsignals s1 umfaßt der Sensor 20 ferner wenigstens ein physikalisch-elektrisches Wandelerelement. Nämliches Wandelerelement kann bei dem in Fig. 4 gezeigten Ausführungsbeispiel als ein Bewegungen der Sensorfahne bzw. gleichermaßen zeitlich ändernde Verformungen des Verformungskörpers in eine veränderliche elektrische Spannung konvertierender piezoelektrisches oder kapazitives Wandlerelement ausgebildet sein. Für den anderen erwähnten Fall, daß es sich bei dem Meßgerät um ein Ultraschall-Durchflußmeßgerät handelt, kann das Wandelerelement beispielsweise ein piezoelektrischer Ultraschallwandler sein bzw. kann die Sensorhalterung beispielsweise auch als ein Koppelelement für einen solchen Ultraschallwandler nämlichen Ultraschall-Durchflußmeßgeräts dienen. Für den ebenfalls erwähnten Fall, daß es sich bei Meßgerät es sich um ein vibronisches Durchfluß-Meßgerät, beispielsweise ein Coriolis-Massendurchflußmeßgerät und/oder um ein vibronisches Dichte-Meßgerät handelt, kann die mit der Sensorhalterung verbundene Komponente des Sensors beispielsweise eine Spule oder beispielsweise auch ein, insb. becherförmiger, Permanentmagnet sein.

Beim erfindungsgemäßen Meßrohr 10 bzw. dem damit gebildeten erfindungsgemäßen Meßgerät ist die Sensorhalterung 120 zumindest anteilig durch ein additives Fertigungsverfahren unmittelbar auf der Mantelfläche der Wandung des, beispielsweise zuvor in einem Urfomverfahren und/oder einem Umformverfahren hergestellten, Grundkörpers 110 hergestellt. Dementsprechend ist also die Sensorhalterung erst nach dem Grundkörper und zwar in situ auf nämlichem Grundkörper hergestellt. Bei dem zur Herstellung der Sensorhalterung angewendeten additiven Fertigungsverfahren kann es sich beispielsweise um ein sogenanntes Freiraumverfahren, wie z.B. ein Auftragschweiß-Verfahren (Cladding), ein Metall-Pulver-Auftragsverfahren (MPA), ein Elektronenstrahlschweiß-Verfahren (Electron Beam Welding = EBW) oder ein Kaltgasspritz-Verfahren, oder aber auch um ein sogenanntes Pulverbettverfahren, wie z.B. ein selektives Laserschmelzen (SLM), einselektives Lasersintern (SLS) oder ein Elektronenstrahlschmelzen (Electron Beam Melting = EBM), handeln.

Bei einem zum Herstellen des Meßrohrs bzw. dessen Sensorhalterung vorteilhaften additiven Verfahren wird zunächst der Grundkörper 110 bereitgestellt und hernach auf nämlichen Grundkörper 110 verflüssigtes Material, beispielsweise also eine verflüssigte Nickelbasislegierung oder ein anderes verflüssigtes Metall, auf eine äußere, nämlich dem Lumen abgewandte, ggf. auch zumindest abschnittsweise gewölbte Mantelfläche 110a' der Wandung 110a des Grundkörpers 110 aufgetragen. Zum Bilden eines mit der Wandung 110a des Grundkörpers 110 stoffschlüssig verbundenen Teilstücks der Sensorhalterung 120 wird auf der äußeren Mantelfläche 110a' appliziertes (noch) flüssiges Material dort dann wieder erstarren gelassen. Nach einer weiteren Ausgestaltung der Erfindung wird ferner auf eine äußere, nämlich dem Lumen abgewandten Fläche eines zuvor gebildeten Teilstücks der Sensorhalterung 120 erneut verflüssigtes Material aufgetragen und dort wiederum erstarren gelassen, um so nämliches Teilstück weiter zu vergrößern bzw. um so ein weiteres Teilstücks der Sensorhalterung zu bilden. Dieser Vorgang wird ggf. mehrfach wiederholt, beispielsweise so oft bis eine zuvor festgelegt gewünschte Form und Größe für die Sensorhalterung bzw. deren Teilstück hergestellt worden ist. Das hierbei verwendete Material kann jeweils immer das gleiche Material sein, beispielsweise nämlich auch das gleiche wie für das mit der Wandung des Grundkörpers unmittelbar verbundene Teilstück; falls erforderlich kann aber beispielsweise auch ein anderes Material als für das mit der Wandung des Grundkörpers unmittelbar verbundene Teilstück oder können auch verschiedene Materialien, ggf. auch abwechselnd für die Bildung der vorbezeichneten weiteren Teilstücke verwendet werden. Zur Bildung von Teilstücken der Sensorhalterung 120 kann der Grundkörper 110 während des Applizierens von verflüssigtem Material beispielsweise auch um die gedachte Längsachse L (hin- und her) verdreht und/oder translatorisch entlang nämlicher Längsachse vor- und zurück verfahren werden. Das dem Bilden der Sensorhalterung dienliche Applizieren von verflüssigtem Material auf die Wandung des Grundkörpers kann beispielsweise mittels einer Multi-Funktions-Maschine (DONE-in-One) durchgeführt werden, wie sie beispielsweise von der Fa. Yamazaki Mazak UK Ltd. unter der Warenbezeichnung "INTEGREX i-400" angeboten wird.

Nach eine weiteren Ausgestaltung der Erfindung weist die Sensorhalterung wenigstens eine Oberfläche auf, die durch ein subtraktives, nämlich materialabtragendes Fertigungsverfahren hergestellt ist, beispielsweise nämlich durch Fräsen und/oder Erodieren. Bei nämlicher, ggf. auch planaren Oberfläche kann es sich beispielsweise auch um die vorbezeichnete Anschluß- und/oder Montagefläche 120a' der Sensorhalterung 120 handeln. Dementsprechend kann das der Herstellung der Sensorhalterung dienliche erfindungsgemäße Herstellungsverfahren zudem auch ein Abtragen von überschüssigen Material aus einem zuvor gebildeten Teilstück der Sensorhalterung umfassen, beispielsweise dirket im Nachgang zur additiven Fertigung mittels der vorbezeichneten Multi-Funktions-Maschine ("INTEGREX i-400).

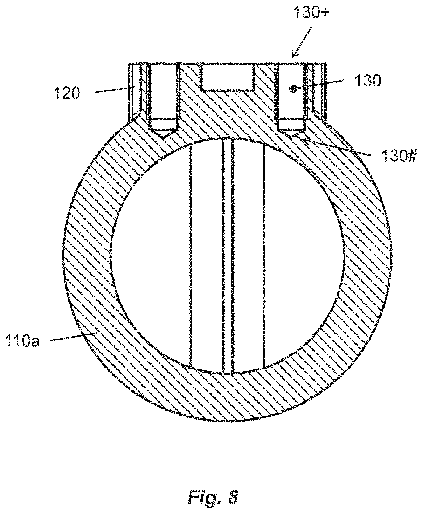

Zwecks Erhöhung einer mechanischen Festigkeit der Sensorhalterung und/oder einer die Sensorhalterung an der Wandung haltenden Verbindungskraft kann es von Vorteil sein, zusätzliche Verankerungsmittel am Meßrohr vorzusehen. Ein solches Verankerungsmittel kann beispielsweise ein Stehbolzen sein, der im Bereich der Sensorhalterung vor deren Herstellung auf mit der Wandung 110a fest verbunden, beispielsweise nämlich auf die Mantelfläche 110a' der Wandung 110a aufgeschweißt, wird und der schlußendlich in die hernach gebildeten Sensorhalterung eingebettet ist. Zur Erhöhung der vorbezeichneten, die Sensorhalterung an der Wandung haltenden Verbindungskraft kann nämlicher Stehbolzen an seiner die Sensorhalterung kontaktierenden Außenfläche zusätzlich auch Formschluß gebende Konturen, beispielsweise etwa eine oder mehrere Rillen und/oder ein Außengewinde und/oder einen Schraubenkopf, aufweisen. Alternativ oder in Ergänzung kann zur Erhöhung vorbezeichneter mechanischer Festigkeit bzw. vorbezeichneter Verbindungskraft beispielsweise aber auch ein mit der Wandung verschraubter bzw. in die Wandung eingeschraubter, beispielsweise als Gewindestange oder als Schraube ausgebildeter, Schraubbolzen vorgesehen sein. Nämlicher Schraubbolzen kann beispielsweise ebenfalls vor der Fertigung der Sensorhalterung in die Wandung eingeschraubt werden. Die Wandung 110a und die Sensorhalterung 120 können aber auch so ausgestaltet sein, daß nämlicher Schraubbolzen beispielsweise auch erst nach Fertigstellung der Sensorhalterung mit dem Meßrohr verbunden werden kann. Dafür ist nach einer weiteren Ausgestaltung beim erfindungsgemäßen Meßrohr zumindest ein, beispielsweise als Sacklochbohrung ausgebildetes, ein offenes Ende 130+ und ein geschlossenen Ende 130# aufweisendes Sackloch 130 vorgesehen, das sich teilweise durch die Sensorhalterung 120 und teilweise durch die Wandung 110a erstreckt, derart, daß - wie auch in Fig. 8 schematisch dargestellt - das Ende 130+ in der Sensorhalterung 120 und das Ende 130# innerhalb der Wandung 110a des Grundkörpers 110 verortet sind. Nämliches Sackloch 130 kann ferner ein entsprechendes, sich ausgehend vom Ende 130+ bis zu einem innerhalb der Wandung 110a liegenden Bereich des Sacklochs 130 erstreckendes Innengewinde aufweisen. Dementsprechend kann das der Herstellung der Sensorhalterung 120 dienliche erfindungsgemäße Herstellungsverfahren zudem auch ein Ausbilden, beispielsweise nämlich ein Ausbohren und/oder Ausfräsen, eines sich teilweise durch die Sensorhalterung und teilweise durch die Rohrwand erstreckenden Sacklochs 130 mit einem offenen Ende 130+ und mit einem geschlossenen Ende 130# umfassen, derart, daß das Ende 130+ in der Sensorhalterung und das Ende 130# innerhalb der Wandung 110a des Grundkörpers 110 verortet sind. Die Verwendung vorbezeichneter Verankerungsmittel, insb. des vorbezeichneten Stehbolzens und/oder des vorbezeichneten Schraubbolzens, hat u.a. auch den Vorteil, daß damit auf ansonsten nach der Herstellung des Meßrohrs ggf. erforderliche aufwendige Untersuchungen bzw. Prüfungen des Materialgefüges von Sensorhalterung 120, beispielsweise durch am fertigen Meßrohr durchzuführende Röntgen- oder Ultraschallmessungen, oder aufwendige Druckprüfungen des Meßrohrs ganz oder teilweise verzichtet werden kann.

## Patentansprüche

1. Meßrohr für ein Meßgerät, insb. für ein Durchfluß-Meßgerät, welches, insb. zumindest abschnittsweise hohlzylindrische, Meßrohr umfaßt:
- einen röhrenförmigen, insb. metallischen und/oder zumindest abschnittsweise hohlzylindrischen, Grundkörper (110) mit einer Wandung (110a) und einem davon umhüllten, insb. zylinderförmigen, Lumen (110b), das dafür eingerichtet ist, einen fluiden Meßstoff (FL1) zu führen;
- sowie eine auf einer äußeren, nämlich dem Lumen abgewandten, insb. zumindest abschnittsweise gewölbten, Mantelfläche (110a') der Wandung (110a) des Grundkörpers (110) angeordnete und stoffschlüssig damit verbundene, insb. metallische und/oder als Anschlußstutzen ausgebildete, Sensorhalterung (120), die dafür eingerichtet ist, zumindest mit wenigstens einer Sensorkomponente, nämlich einer Komponenten eines dem Erfassen wenigstens einer Meßgröße eines im Lumen befindlichen Meßstoffs dienlichen Sensors, insb. wieder lösbar, mechanisch verbunden zu werden;
- wobei der Grundkörper mittels eines gegossenen, gepressten oder geschweißten Rohrs gebildet und/oder durch ein Umformverfahren hergestellt ist;
- und wobei die Sensorhalterung zumindest anteilig durch ein additives Fertigungsverfahren, insb. ein Freiraumverfahren und/oder ein Pulverbettverfahren, unmittelbar auf der Mantelfläche der Wandung des Grundkörpers hergestellt ist.

2. Meßrohr nach nach dem vorherigen Anspruch,
- wobei die Wandung des Grundkörpers und die Sensorhalterung jeweils aus einem gleichen Material und/oder aus Metall, insb. einer Nickelbasislegierung, bestehen; und/oder
- wobei die Wandung des Grundkörpers aus einem Metall, insb. einer Nickelbasislegierung, besteht; und/oder
- wobei die Sensorhalterung aus einem Metall, insb. einer Nickelbasislegierung, besteht; und/oder
- wobei die Sensorhalterung wenigstens eine, insb. durch ein subtraktives, nämlich materialabtragendes Fertigungsverfahren hergestellte, planare Oberfläche aufweist; und/oder
- wobei die Sensorhalterung wenigstens eine, insb. planare, Oberfläche aufweist, die durch ein subtraktives, nämlich materialabtragendes Fertigungsverfahren, insb. Fräsen und/oder Erodieren, hergestellt ist.

3. Meßrohr nach einem der vorherigen Ansprüche, wobei die Sensorhalterung als, insb. hohlzylindrischer und/oder planare Anschluß- und/oder Montagefläche (120a') für die wenigstens eine Sensorkomponente aufweisender, Anschlußstutzen ausgebildet ist.

4. Meßrohr nach einem der vorherigen Ansprüche, wobei die Sensorhalterung als ein, insb. eine planare Anschluß- und/oder Montagefläche für die wenigstens eine Sensorkomponente aufweisendes, Podest ausgebildet ist.

5. Meßrohr nach einem der vorherigen Ansprüche,
- wobei die Sensorhalterung zumindest anteilig durch wenigstens eines der folgenden additiven Fertigungsverfahren hergestellt ist:
-- selektives Laserschmelzen (SLM);
-- selektives Lasersintern (SLS);
-- Elektronenstrahlschmelzen (Electron Beam Melting = EBM);
-- Auftragschweißen (Cladding);
-- Metall-Pulver-Auftragsverfahren (MPA);
-- Kaltgasspritzen;
-- Elektronenstrahlschweißen (Electron Beam Welding = EBW).

6. Meßrohr nach einem der vorherigen Ansprüche,
- wobei zumindest ein, insb. als Durchgangsbohrung ausgebildeten, Durchgangskanal vorgesehen ist, der sich teilweise durch die Sensorhalterung und teilweise durch die Wandung (110a) des Grundkörpers (110) erstreckt; und/oder
- wobei zumindest ein, insb. als Sacklochbohrung ausgebildetes, Sackloch mit einem offenen Ende und mit einem geschlossenen Ende vorgesehen ist, welches Sackloch sich teilweise durch die Sensorhalterung und teilweise durch die Rohrwand erstreckt, derart, daß das offene Ende in der Sensorhalterung und das geschlossene Ende innerhalb der Wandung des Grundkörpers verortet sind.

7. Meßgerät, insb. Durchfluß-Meßgerät, zum Messen wenigstens einer Meßgröße eines, insb. strömenden, Fluids, welches Meßgerät umfaßt:
- ein Meßrohr (10) nach einem der vorherigen Ansprüche;
- einen an nämlichem Meßrohr befestigten, insb. zumindest teilweise in das Lumen des Grundkörpers hineinragenden, Sensor (20) zum Erfassen wenigstens einer Meßgröße eines im Lumen des Meßrohrs befindlichen Meßstoffs und zum Erzeugen eines nämliche Meßgröße repräsentierenden Sensorsignals, von welchem Sensor zumindest eine Komponente mit der Sensorhalterung, insb. wieder lösbar, mechanisch verbunden ist;
- sowie eine mit dem Sensor elektrisch verbundene, insb. mittels wenigstens eines Mikroprozessors gebildete, Meßelektronik (ME), die dafür eingerichtet ist, das wenigstens eine Sensorsignal zu empfangen und zu verarbeiten, insb. nämlich basierend auf dem wenigstens einen Sensorsignal Meßwerte für die wenigstens eine Meßgröße zu ermitteln.

8. Meßgerät nach dem vorherigen Anspruch, bei welchem Meßgerät es sich um ein Durchflußmeßgerät, insb. ein Wirbel-Durchflußmeßgerät, ein Ultraschall-Durchflußmeßgerät, ein Coriolis-Durchflußmeßgerät, ein vibronisches Dichte- und/oder Viskositäts-Meßgerät, ein thermisches Durchflußmeßgerät, oder ein magnetisch-induktives Durchflußmeßgerät, handelt.

9. Meßgerät nach Anspruch 7 oder 8, bei welchem Meßgerät es sich um ein Ultraschall-Durchflußmeßgerät handelt, wobei die Sensorhalterung als Koppelelement für einen Ultraschallwandler dient.

10. Meßgerät nach Anspruch 7 oder 8, bei welchem Meßgerät es sich um ein Wirbel-Durchflußmeßgerät handelt, wobei die mit der Sensorhalterung verbundene Komponente des Sensors ein eine in das Lumen hineinragende Sensorfahne haltender, insb. scheibenförmiger bzw. membranartiger, Verformungskörper ist.

11. Meßgerät nach Anspruch 7 oder 8, bei welchem Meßgerät es sich um ein Coriolis-Massendurchflußmeßgerät und/oder um ein vibronisches Dichte- und/oder Viskositäts-Meßgerät handelt, wobei die mit der Sensorhalterung verbundene Komponente des Sensors eine Spule ist oder wobei die mit der Sensorhalterung verbundene Komponente des Sensors ein, insb. becherförmiger, Permanentmagnet ist.

12. Meßgerät nach Anspruch 7, bei welchem Meßgerät es sich um ein Temperatur-Meßgerät handelt.

13. Meßgerät nach Anspruch 7, bei welchem Meßgerät es sich um ein pH-Wert-Meßgerät handelt.

14. Meßgerät nach Anspruch 7, bei welchem Meßgerät es sich um ein Druck-Meßgerät handelt.

15. Verfahren zum Herstellen eines Meßrohrs für ein Meßgerät, insb. zum Herstellen eines Meßrohrs gemäß einem der Ansprüche 1 bis 6 und/oder zum Herstellen eines Meßrohrs für ein Meßgerät gemäß einem der Ansprüche 7 bis 14, welches Verfahren umfaßt:
- Bereitstellen eines röhrenförmigen, insb. metallischen und/oder zumindest abschnittsweise hohlzylindrischen, Grundkörpers mit einer Wandung und einem davon umhüllten, insb. zylinderförmigen, Lumen;
- Auftragen von verflüssigtem Material, insb. verflüssigtem Metall, auf eine äußere, nämlich dem Lumen abgewandte, insb. zumindest abschnittsweise gewölbte, Mantelfläche der Wandung des Grundkörpers;
- Erstarrenlassen von auf der äußeren Mantelfläche appliziertem flüssigem Material zum Bilden eines mit der Wandung des Grundkörpers stoffschlüssig verbundenen Teilstücks einer Sensorhalterung für einen dem Erfassen wenigstens einer Meßgröße eines im Lumen befindlichen, insb. fluiden, Meßstoffs dienlichen Sensor, welche Sensorhalterung dafür vorgesehen bzw. eingerichtet ist, zumindest mit wenigstens einer Sensorkomponente, nämlich einer Komponente des Sensors, insb. wieder lösbar, mechanisch verbunden zu werden;
- Auftragen von verflüssigtem Material, insb. verflüssigtem Metall, auf eine äußere, nämlich dem Lumen abgewandte Fläche eines zuvor gebildeten Teilstücks der Sensorhalterung;
- sowie Erstarrenlassen von auf nämlicher äußeren Fläche des zuvor gebildeten Teilstücks appliziertem flüssigem Material zum Vergrößern nämlichen Teilstücks bzw. zum Bilden eines weiteren Teilstücks der Sensorhalterung.

16. Verfahren nach dem vorherigen Anspruch, weiters umfassend: Abtragen von überschüssigem Material aus einem zuvor gebildeten Teilstück der Sensorhalterung.

17. Verfahren nach einem der Ansprüche 15 bis 16, weiters umfassend:
- Ausbilden, insb. Ausbohren und/oder Ausfräsen, eines sich teilweise durch die Sensorhalterung und teilweise durch die Rohrwand erstreckenden Durchgangskanals; und/oder
- Ausbilden, insb. Ausbohren und/oder Ausfräsen, eines sich teilweise durch die Sensorhalterung und teilweise durch die Rohrwand erstreckenden Sacklochs mit einem offenen Ende und mit einem geschlossenen Ende, derart, daß das offene Ende in der Sensorhalterung und das geschlossene Ende innerhalb der Wandung des Grundkörpers verortet sind.

## Claims

1. Measuring tube for a measuring device, particularly for a flowmeter, wherein said measuring tube, which is particularly hollow cylindrical at least in sections, comprises:
- a tubular meter body (110), particularly metal and/or at least partially hollow cylindrical, wherein said meter body has a wall (110a) and an interior channel (110b) surrounding said wall, particularly a cylindrical interior channel, wherein said channel is designed to conduct a fluid medium (FL1);
- as well as a sensor holder (120) which is arranged on an outer lateral surface (110a') - situated opposite the interior channel, particularly at least partially curved - of the wall (110a) of the meter body (110), wherein said channel is connected to said wall via a substance-to-substance connection, said sensor holder being particularly metal and/or designed as a connection nozzle, wherein said sensor holder is designed to be connected mechanically, particularly in a detachable manner, to at least one sensor component, particularly a component of a sensor serving to measure at least a measured variable of a medium located in the interior channel;
- wherein the meter body is formed by means of a cast, pressed or welded pipe and/or is made by means of a forming process;
- and wherein the sensor holder is made at least partially by means of an additive manufacturing technology, particularly production in free space and/or selective laser melting, directly on the lateral surface of the wall of the meter body.

2. Measuring tube as claimed in the previous claim,
- wherein the wall of the meter body and the sensor holder are each made from the same material and/or a metal, particularly a nickel-based alloy; and/or
- wherein the wall of the meter body is made from a metal, particularly a nickel-based alloy; and/or
- wherein the sensor holder is made from a metal, particularly a nickel-based alloy; and/or
- wherein the sensor holder has at least a planar surface, particularly made using a subtractive manufacturing process, specifically one that removes material; and/or
- wherein the sensor holder has at least a surface, particularly planar, that is made using a subtractive manufacturing process, specifically involving the removal of material, particularly by milling and/or eroding.

3. Measuring tube as claimed in one of the previous claims, wherein the sensor holder is formed as a connection nozzle, particularly hollow cylindrical and/or having a planar connection and/or mounting surface (120a') for the at least one sensor component.

4. Measuring tube as claimed in one of the previous claims, wherein the sensor holder is formed as a platform particularly having a planar connection and/or mounting surface for the at least one sensor component.

5. Measuring tube as claimed in one of the previous claims,
- wherein the sensor holder is at least partially made by at least one of the following additive manufacturing technologies:
-- Selective laser melting (SLM);
-- Selective laser sintering (SLS);
-- Electron beam melting (EBM);
-- Cladding;
-- Metal powder application (MPA);
-- Cold spraying;
-- Electron beam Welding (EBW)

6. Measuring tube as claimed in one of the previous claims,
- wherein at least one through-channel, particularly designed as a through-hole, is provided, wherein said channel extends partially through the sensor holder and partially through the wall (110a) of the meter body (110); and/or
- wherein a blind hole, particularly designed as a blind borehole, is provided with one open end and one closed end and wherein said blind hole extends partially through the sensor holder and partially through the tube wall, in such a way that the open end is located in the sensor holder and the closed end is located inside the wall of the meter body.

7. Measuring device, particularly a flowmeter, designed to measure at least one measured variable of a fluid, particularly a flowing fluid, said measuring device comprising:
- a measuring tube (10) as claimed in one of the previous claims;
- a sensor (20) fixed on the measuring tube, particularly at least partially projecting into the interior channel of the meter body, said sensor (20) being designed to measure at least one measured variable of a medium located in the interior channel of the measuring tube and to generate a sensor signal representing said measured variable, wherein at least one component of said sensor is connected mechanically, particularly in a detachable manner, to the sensor holder;
- and a measuring electronics unit (ME) electrically connected to the sensor, said electronics unit being particularly formed by at least one microprocessor and wherein said electronics unit is designed to receive and process the at least one sensor signal, particularly for the purpose of determining measured values for the at least one measured variable based on the at least one sensor signal.

8. Measuring device as claimed in the previous claim, wherein said measuring device is a flowmeter, particularly a vortex flowmeter, an ultrasonic flowmeter, a Coriolis flowmeter, a vibronic density and/or viscosity measuring device, a thermal flowmeter or an electromagnetic flowmeter.

9. Measuring device as claimed in Claim 7 or 8, wherein the measuring device is an ultrasonic flowmeter, wherein the sensor holder serves as a coupling element for an ultrasonic transducer.

10. Measuring device as claimed in Claim 7 or 8, wherein the measuring device is a vortex flowmeter, wherein the component of the sensor connected to the sensor holder is a deformation body, particularly in the form of a disk or a membrane, which holds a sensor lug projecting into the interior channel.

11. Measuring device as claimed in Claim 7 or 8, wherein the measuring device is a Coriolis mass flowmeter and/or a vibronic density and/or viscosity measuring device, wherein the component of the sensor connected to the sensor holder is a coil or wherein the component of the sensor connected to the sensor holder is a permanent magnet, particularly in the form of a cup.

12. Measuring device as claimed in Claim 7, wherein the measuring device is a temperature measuring device.

13. Measuring device as claimed in Claim 7, wherein the measuring device is a pH value measuring device.

14. Measuring device as claimed in Claim 7, wherein the measuring device is a pressure measuring device.

15. Procedure for the manufacture of a measuring tube for a measuring device, particularly designed to produce a measuring tube as claimed in one of the Claims 1 to 6 and/or designed to produce a measuring tube for a measuring device as claimed in one of the Claims 7 to 14, wherein said procedure comprises the following steps:
- Provision of a tubular meter body, particularly metal and/or at least partially hollow cylindrical, wherein said meter body has a wall and an interior channel, particularly cylindrical, wherein said channel is surrounded by said wall;
- Application of liquefied material, particularly liquid metal, on an exterior lateral surface - particularly facing away from the interior channel, particularly at least partially curved - of the wall of the meter body;
- Solidification of the liquid material applied to the exterior lateral surface to form a part of the sensor holder, connected via a substance-to-substance connection to the wall of the meter body, for a sensor which serves to measure at least one measured variable of a medium, particularly fluid, located in the interior channel, said sensor holder being provided or designed at least to be connected mechanically, particularly in a detachable manner, to at least a sensor component, specifically a component of the sensor;
- Application of liquefied material, particularly liquid metal, to an exterior surface, particularly facing away from the interior channel, of a part of the sensor holder formed previously;
- Solidification of the liquid material applied to said exterior surface of the part formed previously to increase said part and/or to form another part of the sensor holder.

16. Procedure as claimed in the previous claim, further comprising the following step: Removal of excess material from a part of the sensor holder formed previously.

17. Procedure as claimed in one of the Claims 15 to 16, further comprising the following steps:
- Formation, particularly drilling and/or milling, of a through-channel extending partially through the sensor holder and partially through the tube wall; and/or
- Formation, particularly drilling and/or milling, of a blind hole extending partially through the sensor holder and partially through the tube wall, said blind hole having an open end and a closed end, in such a way that the open end is situated in the sensor holder and the closed end is situated inside the wall of the meter body.

## Revendications

1. Tube de mesure pour un appareil de mesure, notamment pour un débitmètre, lequel tube de mesure, notamment cylindrique creux au moins par sections, comprend :
- un corps de base (110) tubulaire, notamment métallique et/ou au moins partiellement cylindrique creux, lequel corps de base présente une paroi (110a) et un canal intérieur (110b) enveloppé par celle-ci, notamment cylindrique, lequel canal est conçu pour guider un produit mesuré fluide (FL1) ;
- ainsi qu'un support de capteur (120) disposé sur une surface d'enveloppe (110a') extérieure - notamment située à l'opposé du canal intérieur, notamment au moins partiellement bombée - de la paroi (110a) du corps de base (110), lequel canal est relié à la dite paroi par liaison de matière, lequel support de capteur est notamment métallique et/ou réalisé sous forme de tubulure de raccordement, lequel support de capteur est conçu pour être relié mécaniquement, notamment de manière amovible, à au moins un composant de capteur, notamment un composant d'un capteur servant à mesurer au moins une grandeur de mesure d'un produit se trouvant dans le canal intérieur ;
- le corps de base étant formé au moyen d'un tube coulé, pressé ou soudé et/ou étant fabriqué au moyen d'un procédé de formage ;
- et le support de capteur étant fabriqué au moins partiellement au moyen d'un procédé de fabrication additive, notamment un procédé de solides à forme libre et/ou un procédé à lit de poudre, directement sur la surface d'enveloppe de la paroi du corps de base.

2. Tube de mesure selon la revendication précédente,
- pour lequel la paroi du corps de base et le support de capteur sont constitués chacun d'un même matériau et/ou d'un métal, notamment d'un alliage à base de nickel ; et/ou
- pour lequel la paroi du corps de base est constituée d'un métal, notamment d'un alliage à base de nickel ; et/ou
- pour lequel le support de capteur est constitué d'un métal, notamment d'un alliage à base de nickel ; et/ou
- pour lequel le support de capteur présente au moins une surface plane, notamment fabriquée par un procédé de fabrication soustractive, à savoir par enlèvement de matière ; et/ou
- pour lequel le support de capteur présente au moins une surface, notamment plane, qui est fabriquée par un procédé de fabrication soustractive, à savoir par enlèvement de matière, notamment par fraisage et/ou érosion.

3. Tube de mesure selon l'une des revendications précédentes, pour lequel le support de capteur est réalisé sous la forme d'une tubulure de raccordement, notamment cylindrique creuse et/ou présentant une surface de raccordement et/ou de montage plane (120a') pour l'au moins un composant de capteur.

4. Tube de mesure selon l'une des revendications précédentes, pour lequel le support de capteur est réalisé sous la forme d'une plate-forme présentant notamment une surface de raccordement et/ou de montage plane pour l'au moins un composant de capteur.

5. Tube de mesure selon l'une des revendications précédentes,
- pour lequel le support de capteur est fabriqué au moins partiellement par au moins l'un des procédés de fabrication additive suivants :
-- Fusion sélective au laser (SLM) ;
-- Frittage sélectif au laser (SLS) ;
-- Fusion par faisceau d'électrons (Electron Beam Melting = EBM) ;
-- Placage par soudage (Cladding) ;
-- Dépôt de poudre métallique (MPA) ;
-- Projection de gaz froid ;
-- Soudage par faisceau d'électrons (Electron Beam Welding = EBW)

6. Tube de mesure selon l'une des revendications précédentes,
- pour lequel il est prévu au moins un canal de passage, notamment sous la forme d'un trou traversant, lequel canal s'étend partiellement à travers le support de capteur et partiellement à travers la paroi (110a) du corps de base (110) ; et/ou
- pour lequel il est prévu au moins un trou borgne, notamment un alésage borgne, lequel trou borgne présente une extrémité ouverte et une extrémité fermée et lequel trou borgne s'étend partiellement à travers le support de capteur et partiellement à travers la paroi de tube, de telle sorte que l'extrémité ouverte est située dans le support de capteur et l'extrémité fermée est située à l'intérieur de la paroi du corps de base.

7. Appareil de mesure, notamment un débitmètre, destiné à la mesure d'au moins une grandeur de mesure d'un fluide, notamment d'un fluide en écoulement, lequel appareil de mesure comprend :
- un tube de mesure (10) selon l'une des revendications précédentes ;
- un capteur (20) fixé sur le tube de mesure, pénétrant notamment au moins partiellement dans le canal intérieur du corps de base, lequel capteur est destiné à mesurer au moins une grandeur de mesure d'un produit se trouvant dans le canal intérieur du tube de mesure et lequel capteur est destiné à générer un signal de capteur représentant la même grandeur de mesure, capteur dont au moins un composant est relié mécaniquement, notamment de manière amovible, au support de capteur ;
- ainsi qu'une électronique de mesure (ME) reliée électriquement au capteur, laquelle électronique est formée notamment au moyen d'au moins un microprocesseur et laquelle électronique est conçue pour recevoir et traiter l'au moins un signal de capteur, notamment afin de déterminer, sur la base de l'au moins un signal de capteur, des valeurs mesurées pour l'au moins une grandeur de mesure.

8. Appareil de mesure selon la revendication précédente, lequel instrument de mesure est un débitmètre, notamment un débitmètre à effet Vortex, un débitmètre à ultrasons, un débitmètre Coriolis, un appareil de mesure vibronique de densité et/ou de viscosité, un débitmètre thermique ou un débitmètre électromagnétique.

9. Appareil de mesure selon la revendication 7 ou 8, pour lequel l'appareil de mesure est un débitmètre à ultrasons, le support de capteur servant d'élément de couplage pour un transducteur à ultrasons.

10. Appareil de mesure selon la revendication 7 ou 8, pour lequel il s'agit d'un débitmètre à effet Vortex, le composant du capteur relié au support de capteur étant un corps déformable, notamment en forme de disque ou de membrane, qui maintient une languette de capteur pénétrant dans le canal intérieur.

11. Appareil de mesure selon la revendication 7 ou 8, pour lequel l'appareil de mesure est un débitmètre massique Coriolis et/ou un appareil de mesure vibronique de densité et/ou de viscosité, le composant du capteur relié au support de capteur étant une bobine ou le composant du capteur relié au support de capteur étant un aimant permanent, notamment en forme de coupe.

12. Appareil de mesure selon la revendication 7, pour lequel l'appareil de mesure est un appareil de mesure de température.

13. Appareil de mesure selon la revendication 7, pour lequel l'appareil de mesure est un appareil de mesure de pH.

14. Appareil de mesure selon la revendication 7, pour lequel l'appareil de mesure est un appareil de mesure de pression.

15. Procédé destiné à la fabrication d'un tube de mesure pour un appareil de mesure, notamment destiné à la fabrication d'un tube de mesure selon l'une des revendications 1 à 6 et/ou destiné à la fabrication d'un tube de mesure pour un appareil de mesure selon l'une des revendications 7 à 14, lequel procédé comprend les étapes suivantes :
- Préparation d'un corps de base tubulaire, notamment métallique et/ou au moins partiellement cylindrique creux, lequel corps de base présente une paroi et un canal intérieur, notamment cylindrique, lequel canal est enveloppé par ladite paroi ;
- Application de matériau liquéfié, notamment de métal liquéfié, sur une surface d'enveloppe extérieure - notamment située à l'opposé du canal intérieur, notamment bombée au moins partiellement - de la paroi du corps de base ;
- Solidification du matériau liquide appliqué sur la surface d'enveloppe extérieure pour former une partie, reliée par liaison de matière à la paroi du corps de base, d'un support de capteur pour un capteur servant à mesurer au moins une grandeur de mesure d'un produit, notamment fluide, se trouvant dans le canal intérieur, lequel support de capteur est prévu ou conçu pour être relié mécaniquement, notamment de manière amovible, à au moins un composant de capteur, à savoir un composant du capteur ;
- Application de matériau liquéfié, notamment de métal liquéfié, sur une surface extérieure, notamment située à l'opposé du canal intérieur, d'une partie préalablement formée du support de capteur ;
- Solidification du matériau liquide appliqué sur la même surface extérieure de la partie précédemment formée pour agrandir cette même partie ou pour former une autre partie du support de capteur.

16. Procédé selon la revendication précédente, comprenant en outre l'étape suivante : Enlèvement du matériau en excès d'une partie précédemment formée du support de capteur.

17. Procédé selon l'une des revendications 15 à 16, comprenant en outre les étapes suivantes :
- Réalisation, notamment perçage et/ou fraisage, d'un canal de passage s'étendant partiellement à travers le support de capteur et partiellement à travers la paroi de tube ; et/ou
- Réalisation, notamment perçage et/ou fraisage, d'un trou borgne s'étendant partiellement à travers le support de capteur et partiellement à travers la paroi de tube, lequel trou borgne présente une extrémité ouverte et une extrémité fermée, de telle sorte que l'extrémité ouverte est située dans le support de capteur et que l'extrémité fermée est située à l'intérieur de la paroi du corps de base.
